# EUROPÄISCHE PATENTANMELDUNG

(11) **EP 0 837 035 A1**
(43) Veröffentlichungstag der Anmeldung: **22.04.1998**
(21) Anmeldenummer: 97117552.6
(22) Anmeldetag: 10.10.1997
(51) Int. Cl.: C01F 7/54, B23K 35/363

(54) **Niedrigschmelzendes Kaliumfluoraluminat**

(30) Priorität: 18.10.1996 DE 19643026
(71) Anmelder: Solvay Fluor und Derivate GmbH, D-30173 Hannover (DE)
(72) Erfinder: Belt, Heinz-Joachim, 30938 Burgwedel (DE); Sander, Rüdiger, 31319 Sehnde (DE); Rudolph, Werner, 30559 Hannover (DE)
(74) Vertreter: Lauer, Dieter, Dr.

(57) **Zusammenfassung**

Beschrieben wird die Herstellung eines Kaliumfluoraluminats mit niedrigem Schmelzpunkt, das als Flußmittel beim Aluminiumlöten brauchbar ist. Es wird aus Aluminiumhydroxid, Fluorwasserstoff und Kaliumhydroxid im wäßrigen Medium im Molverhältnis von Aluminium:Fluor:Kalium von etwa 1:5:2 hergestellt. Nach dem Trocknen bei 80 °C im Vakuum weist das hergestellte Kaliumfluoraluminat einen Schmelzpunkt gemäß DSC im Bereich von ca. 548 °C auf.

## Beschreibung

Die vorliegende Erfindung betrifft ein Verfahren zur Herstellung eines niedrigschmelzendes Kaliumfluoraluminats, das nach dem Verfahren erhältliche Produkt und seine Anwendung als Flußmittel für das Löten von Leichtmetallwerkstoffen.

Beim Hartlöten oder Ofenlöten werden Metallwerkstoffe, besonders Aluminium, bei einer Temperatur oberhalb von 500 °C mit Hilfe eines geschmolzenen Zusatzmetalls (Lot) verbunden. Ein Flußmittel wird zugesetzt, um Oxide und andere störende Deckschichten auf der Metalloberfläche zu entfernen. Hierzu verwendet man insbesondere Flußmittel auf Basis von Kaliumfluoraluminaten. Die Herstellung von Kaliumfluoraluminaten ist in technischer als auch wissenschaftlicher Hinsicht untersucht worden. Gemäß der Veröffentlichung von I. V. Tananaev und M. A. Nekhamkina in Izvest. Sektora Fiz.-Khim- Anal., Akad. Nauk S.S.S.R. 20, Seiten 227 bis 237 (1950) können Kaliumfluoraluminate beispielsweise aus (stark verdünnten) Lösungen von Kaliumfluorid und Aluminiumfluorid hergestellt werden. Bei einem Molverhältnis von KF zu AlF₃ von 2:1 bis 10:1 entsteht im wesentlichen anscheinend das Hydrat von Dikaliumpentafluoraluminat (K₂AlF₅ · H₂O). Der Schmelzpunkt dieses Produktes liegt gemäß der russischen Veröffentlichung bei 855 °C. Obwohl Monokaliumtetrafluoraluminat und Trikaliumhexafluoraluminat existieren, entstehen sie gemäß Tananaev et al. zumindest in dem angegebenen Bereich für das Molverhältnis von KF zu AlF₃ von 1:1 bis 10:1 nicht. Ein Kaliumfluoraluminat mit einem derart hohen Schmelzpunkt wäre als Lötflußmittel für das Aluminiumlöten beispielsweise untauglich.

Willenberg et al., US-A 4,428,920 offenbaren ein Verfahren zur Herstellung von Kaliumtetrafluoraluminat mit einem Schmelzpunkt unterhalb von 575 °C. Dabei wird Fluoroaluminiumsäure mit Kaliumverbindungen wie KOH umgesetzt; es wird bemerkt, daß bei der Verwendung äquimolarer Mengen der Reaktanten kein zufriedenstellendes Produkt erhalten wird; es wird vorgeschlagen, Kalium im stöchiometrischen Unterschuß in die Reaktionsmischung einzubringen. Der niedrigste Schmelzpunkt der hergestellten Produkte liegt bei 570 °C. Gemäß Shimizu et al., US-A 5,171,377 wird ein Schmelzpunkt von 560 °C, wie er bei Kaliumfluoraluminaten beobachtet wird, noch als zu hoch angesehen. Die Absenkung des Schmelzpunktes, wie sie durch Beimischung von Aluminiumammoniumfluorid oder durch Einsatz von Gemischen von Cäsiumfluoraluminat und Aluminiumfluorid bewirkt wird, wird als mit Nachteilen behaftet angesehen.

Kawase, US-A 4,579,605 offenbart ein Flußmittel für das Aluminiumlöten, welches eine Mischung von Monokaliumtetrafluoraluminat und Dikaliumpentafluoraluminat oder sein Hydrat umfaßt. Derartige Gemische sollen bei einer Temperatur von 555 °C bis 574 °C schmelzen. Sie werden hergestellt, wenn man Reaktionsmischungen erzeugt, in welchen als unabdingbare Voraussetzung das Verhältnis von Al:F:K im Bereich von 1:4 bis 4.5:1 bis 1,5 liegt.

Aufgabe der vorliegenden Erfindung ist es, ein Kaliumfluoraluminat anzugeben, welches einen noch niedrigeren Schmelzpunkt als die bekannten Kaliumfluoraluminate aufweist. Diese Aufgabe wird durch das nach dem Verfahren der vorliegen Erfindung erhältliche Kaliumfluoraluminat gelöst.

Das erfindungsgemäße Verfahren zur Herstellung eines, als Flußmittel mit niedrigem Schmelzpunkt zum Aluminiumlöten brauchbaren Kaliumfluoraluminats ist dadurch gekennzeichnet, daß Al(OH)₃, HF und KOH in wäßrigem Medium im Molverhältnis von Al:F:K = 1:5±0,2:2±0,1 umgesetzt werden, wobei niedrigschmelzendes Kaliumfluoraluminat mit einem nach Trocknen bei 80 °C im Vakuum bestimmten Schmelzpunkt gemäß DSC "Differential Scanning Calorimetry" von 546 bis 550 °C ausfällt.

Bevorzugt setzt man die Reaktanten im Molverhältnis Al:F:K = 1:5±0,1:2±0,05 ein.

Den Fluorwasserstoff bringt man zweckmäßig in Form einer Flußsäure in die Reaktion ein, wobei die Konzentration an HF zweckmäßig im Bereich von 20 bis 70 Gew.-% liegen sollte. Das KOH kann in fester Form oder als Lauge dann zweckmäßig in einer Konzentration von 20 bis 60 Gew.-% KOH, in die Reaktion eingebracht werden. Das Aluminiumhydroxid (Aluminiumoxidhydrat) wird zweckmäßig als Feststoff eingesetzt.

Zweckmäßig geht man so vor, daß man eine wäßrige Fluorwasserstoff-Lösung vorlegt, Aluminiumhydroxid zugibt und dann Kaliumhydroxid zufügt.

Das bei der Reaktion entstehende, kristalline Produkt wird von der überstehenden Reaktionslösung abgetrennt, beispielsweise durch Filtern. Anschließend kann es getrocknet werden. Hierzu kann man es beispielsweise im Vakuum trocknen, vorteilhaft bei einer Temperatur unterhalb von 100 °C, beispielsweise bei 80 °C.

Das auf diese Weise erhaltene Produkt weist gemäß DSC einen Schmelzpunkt im Bereich von 546 bis 550 °C auf. Das nach dem erfindungsgemäßen Verfahren erhaltene Kaliumfluoraluminat mit diesem gemäß DSC bestimmten Schmelzpunkt von 546 bis 550 °C, vorzugsweise 547 bis 549 °C, ist ebenfalls Gegenstand der Erfindung. Es läßt sich hervorragend als Flußmittel beim Löten von Aluminium und Aluminiumlegierungen einsetzen, wobei der niedrige Schmelzpunkt von Vorteil ist. Bei der Anwendung kann man es in bekannter Weise auf die zu verlötenden Metallteile aufbringen, beispielsweise durch Bestreuen der Teile.

Das Flußmittel kann auch in Form einer wäßrigen Suspension oder Paste auf die zu verbindenden Metallbauteile aufgebracht werden. Der Gehalt an Flußmittel liegt dann zweckmäßig zwischen 3 und 70 Gew.-%. Rest auf 100 Gew.-% sind Wasser oder organische Flüssigkeiten wie Alkohole. Gewünschtenfalls kann das Flußmittel oder die wäßrige Zubereitung übliche Hilfsstoffe enthalten, beispielsweise Bindemittel.

Das Flußmittel kann auch gemäß der Lehre der WO 92/12821 ein Metall beigemischt enthalten, welches mit einer oder beiden zu lötenden Metalloberflächen ein lötbares Eutektikum bildet. Ein solches Metall ist beispielsweise Silicium, möglichst fein gepulvert. Es können auch die Oberflächeneigenschaften der gelöteten Teile modifizierende Metalle wie Eisen, Mangan, Nickel, Zink u. a. enthalten sein.

Das erfindungsgemäße Flußmittel zeichnet sich durch seinen niedrigen Schmelzpunkt aus und ist deshalb für die Anwendung vorteilhaft.

Die folgenden Beispiele sollen die Erfindung weiter erläutern, ohne sie in ihrem Umfang einzuschränken.

### Beispiel 1:

### Herstellung des Flußmittels

1 mol Aluminiumhydroxid wurde in eine wäßrige Fluorwasserstoff-Lösung, die 5 mol HF in einer Konzentration von 50 Gew.-% enthielt, eingebracht und bei 70 °C mit 2 mol KOH umgesetzt. Das kristalline Produkt wurde abgefiltert und im Vakuum bei 80 °C getrocknet. Der gemäß DSC-Aufnahme bestimmte Schmelzpunkt des Produktes liegt bei 548 °C.

### Beispiel 2:

### Anwendung zum Löten

Ein Aluminium-Winkel und eine Aluminium-Platte wurden in eine 60 Gew.-% des gemäß Beispiel 1 hergestellten Flußmittels enthaltende wäßrige Lösung eingetaucht und getrocknet. Der Aluminium-Winkel wurde auf die Aluminium-Platte aufgelegt und ein Lotmetall zugesetzt. Anschließend wurden die Bauteile im Lötofen auf 570°C erhitzt und unter Bildung einer einwandfreien Lotstelle miteinander verlötet.

## Patentansprüche

1. Verfahren zur Herstellung eines, als Flußmittel mit niedrigem Schmelzpunkt zum Aluminiumlöten brauchbaren Kaliumfluoraluminats, dadurch gekennzeichnet, daß Al(OH)₃, HF und KOH in wäßrigem Medium im Molverhältnis von Al:F:K = 1:5±0,2:2±0,1 umgesetzt werden, wobei niedrigschmelzendes Kaliumfluoraluminat mit einem nach Trocknen bei 80 °C im Vakuum bestimmten Schmelzpunkt gemäß DSC von 546 bis 550 °C ausfällt.

2. Verfahren nach Anspruch 1, dadurch gekennzeichnet, daß man die Umsetzung bei 60 °C bis zum Kochpunkt der Reaktionsmischung, vorzugsweise bei einer Temperatur von 60 bis 75 °C durchführt.

3. Verfahren nach Anspruch 1, dadurch gekennzeichnet, daß man das ausgefallene Kaliumfluoraluminat und die wäßrige Phase voneinander trennt und man das abgetrennte Kaliumfluoraluminat trocknet.

4. Verfahren nach Anspruch 1, dadurch gekennzeichnet, daß man Al(OH)_{3,} HF und KOH im Molverhältnis von Al:F:K = 1:5±0,1:2±0,05 einsetzt.

5. Verfahren nach Anspruch 1, dadurch gekennzeichnet, daß man Al(OH)₃ in wäßrige HF-Lösung einbringt und KOH zufügt.

6. Nach dem Verfahren gemäß einem der Ansprüche 1 bis 5 erhältliches, nach Trocknen bei 80 °C im Vakuum einen Schmelzpunkt gemäß DSC von 546 bis 550 °C aufweisendes Kaliumfluoraluminat.

7. Verwendung des gemäß einem der Ansprüche 1 bis 5 hergestellten Kaliumfluoraluminats als Flußmittel beim Aluminiumlöten.
